# EUROPEAN PATENT SPECIFICATION

(11) **EP 0 478 712 B1**
(45) Date of publication and mention of the grant of the patent: **24.08.1994**
(21) Application number: 90917807.1
(22) Date of filing: 25.06.1990
(51) Int. Cl.: B65G 53/60, B01D 50/00, B01D 45/16, B01D 46/24

(54) **MATERIAL DISCHARGE UNIT**
ENTLADEEINHEIT FÜR MATERIALIEN
SYSTEME D'EVACUATION DE DECHETS

(30) Priority: 24.06.1989 GB 8914573
(43) Date of publication of application: 08.04.1992
(73) Proprietor: M & Y AIR SYSTEMS LIMITED, Twickenham, Middlesex TW1 1DN (GB)
(72) Inventor: SEXTON, Michael, Middlesex TW4 5PT (GB)
(74) Representative: Luckhurst, Anthony Henry William
(86) International application number: GB9000980
(87) International publication number: WO9100234

(56) References cited:
- EP-A- 0 004 125
- GB-A- 2 134 815

## Description

This invention relate to material discharge units.

In waste recovery systems, e.g. in the paper, board, plastics and foil industries, waste material is trimmed off and collected by suction, cut into short lengths if necessary, and conveyed in air streams to a discharge point where it is separated from the conveying air stream and discharged by a material discharge unit.

### BACKGROUND

It is conventional to use a cyclone separator for such separation and discharge. However, for large volume flows, cyclones tend to be bulky and may need to be housed outside of a factory building, e.g. on the roof. Such cyclones then need substantial support structures, e.g. steel frameworks extending down to the factory floor level. The cost of the cyclone thus becomes greatly increased. Also, the appearance of cyclone separators is regarded as environmentally detrimental and it may not always be possible to obtain planning consent for the erection of one or more cyclone separators on the roof of a building or in any other visually obtrusive location.

In GB-A-1247211 there is shown a form of apparatus for separating laundry from a conveying air stream. The apparatus disclosed in that specification consists of an arcuate conduit or bend enclosed within a housing. The comparatively heavy and bulky items of laundry remain in the conduit and collect on counterweighted doors for discharge. The air passes through the conduit into the housing and is discharged separately. With such an arrangement, the comparatively heavy items of laundry do not tend to be held on the interior walls of the duct by the flowing air.

GB-A-2134815 describes a separator suitable for light weight material such as paper, board, foil and plastics. In that separator there is provided a perforate duct having a perforate bend at its end where the discharge material and air separate. A fixed deflection baffle plate is provided to deflect the air flow and material just prior to the bend to direct it around the outside of the bend. The present invention provides an arrangement based on the apparatus described in GB-A-2134815. In order to optimise the operation of a unit it is necessary to have the deflection baffle at a particular angle which will vary with the material, the material size and other operating conditions. The apparatus of GB-A-2134815, which has been reduced to practice, requires that the unit be shut down before any adjustment is made to the baffle angle. Also, to clean the unit, the perforate duct is withdrawn sideways, or from above, and this may make it difficult to withdraw the duct if there is a substantial amount of material in it, because it wedges between the duct ends and the adjacent ducting, and material may fall into the surrounding housing, to be blown out with the air stream on start up of the unit.

### SUMMARY OF THE INVENTION

According to a first aspect of the invention there is provided a material discharge unit for separating light weight solid material elements of substantial size from a conveying air or gas stream, comprising a housing, an elongate perforate duct in the housing, on an inlet for feeding the conveying stream and suspended solid elements to the interior of the perforate duct, a perforate bend within the housing at the discharge end of the perforate duct to discharge the solid material at an angle to the air flow direction while allowing the air or gas stream to continue onwardly to a discharge end of the housing, a deflection baffle located at the junction between the elongate duct and the perforate bend to deflect the conveying stream and solid material elements away from the solid material element discharge direction so that they impinge on the wall of the perforate bend at an acute angle, and means provided for adjusting the angle of the deflection baffle, characterised in that the adjustment means is adapted to be operated while the discharge unit is in use, and the adjustment means is arranged to hold the baffle in place mechanically against the force of the air or gas stream during adjustment.

In this way adjustment of the operation of the unit is faciliatated. The baffle plate preferably carries an air blocking, fixed skirt which extends to adjacent one side of the duct to be fixed by clamping means externally of the duct and bend in chosen positions to alter the effective deflecting angle of the baffle plate. The skirt also servies to prevent the build up of material under the baffle plate.

The baffle plate may be arranged to be adjusted non-manually using electric, pneumatic or hydraulic power. With such an arrangement control means may be arranged remote from the discharge unit to allow the baffle plate to be adjustable automatically and/or remotely. A motor may act on a shaft on which the baffle plate pivots.

The perforate duct may be provided with an elongate aperture extending substantially along the length thereof and provided with a removable or hingeable panel to allow the duct to be emptied (or unblocked) via the aperture.

According to a second aspect of the invention there is provided a material discharge unit for separating lightweight solid material elements of substantial size from a conveying air or gas stream, comprising a housing, an elongate perforate duct in the housing, an inlet for feeding the conveying stream and suspended solid elements to the interior of the perforate duct, a perforate bend within the housing at the discharge end of the perforate duct to discharge the solid material at an angle to the air flow direction while allowing the air or gas stream to continue onwardly to a discharge end of the housing, and a deflection baffle located at the junction between the elongate duct and the perforate bend to deflect the solid material elements and the conveying air or gas stream away from the solid material element discharge direction so that they inpinge on the wall of the perforate bend at an acute angle, characterised in that a readily openable panel is provided on an underside of the housing and a readily openable panel is provided on an underside of the duct, whereby the two panels may be opened to drop waste material from the duct and housing when cleaning the unit.

Preferably the duct is of D-shaped cross-section, the upright of the D shape forming the underside wall of the duct.

By having openable panels on the underside, it is ensured that no waste material collects in the housing during cleaning, and access to the duct interior is facilitated.

### BRIEF DESCRIPTION OF THE DRAWINGS

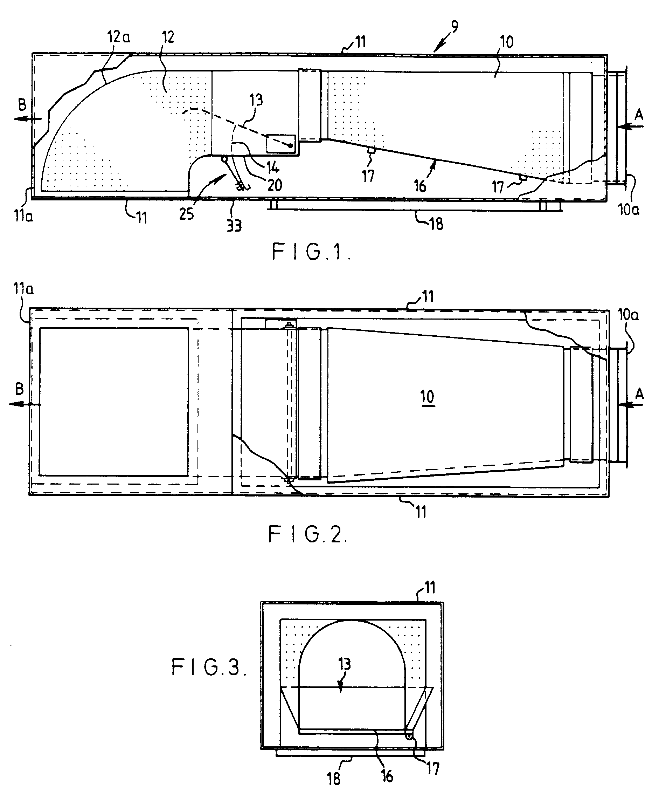

A material discharge unit forming a preferred embodiment of the invention will now be described by way of example with reference to the accompanying drawings in which: -
Fig. 1 is a side elevation of the unit;
Fig. 2 is a plan view of the unit;
Fig. 3 is an end view of the unit; and
Fig. 4 is a detailed part sectional side view, on enlarged seale, of a mechanism for adjusting a baffle plate angle.

### DESCRIPTION OF THE PREFERRED EMBODIMENT

The drawings show a material discharge unit 9 forming a preferred embodiment of the invention. A flow of air with suspended waste material enters at A. The air flow may be provided by a fan which serves also to chop the waste material into a preferred size range. The material itself is typically of paper, board, plastics or foil. The flow A is into an entry section 10a of a duct 10 having perforated walls. The duct changes from D-shaped cross-section to a rectangular section, and is located within an outer housing 11 which forms an enclosing air duct. The upright of the D forms the base of the duct and is not perforated. At the downstream end, the duct 10 leads into a bend section 12 which is perforated on the outside of the bend and at the sides. In use, the flow of air or gas continues out of the open end 11a of the housing 11 as indicated by the arrow B, while suspended solid material elements are deflected downwards by the outer wall 12a of the bend section into a discharge duct (not shown) down which the solid material falls by gravity (indicated by arrow C). The discharge duct may include isolating flap valves so as to provide an air lock arrangement so that the air flow in the discharge duct is substantially zero, although in practice it is very small anyway.

Within the bend 12 and adjacent to the exit from the duct 10 there is provided an adjustable, metal baffle plate 13. The baffle plate 13 directs the air stream and conveyed material elements on to the outside wall of the bend section 12 to meet the wall at an acute angle. The baffle plate 13 has fixed to its underside a generally arcuate, metal skirt 14 which extends to outside of the ducts 10 and 12 to a clamp mechanism 25 to fix the skirt 14 and hence the plate 13 in a chosen or desired position. The arcuate skirt 14 blocks off between the undersurface of the plate 13 and the inside wall of the duct 12 to prevent any or any substantial air flow under the plate 13 and the accumulation of material under the plate.

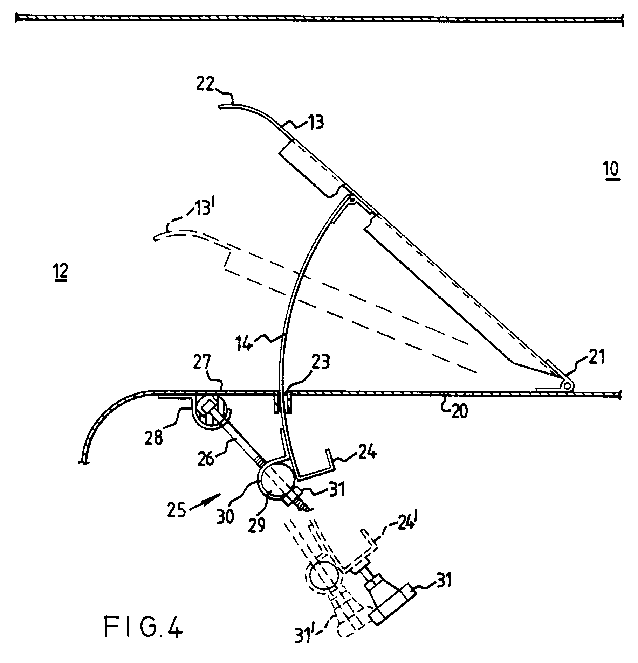

Figure 4 shows a particularly preferred mechanism for adjustment of the angle of the plate 13. The plate 13 is mounted on a bottom wall 20 of the ducting at the junction between the duct 10 and bend 11 by a piano hinge 21. The plate 13 extends across the width of the ducting at this point. The plate 13 is generally flat with a curved outer end 22. Hinged to the underside of the plate 13 is the arcuate skirt 14 which extends through an aperture 23 in the wall 20 and again extends across the width of the ducting. The lower end 24 of the skirt 14 is attached to the underside of the wall 20 by a manually adjustable mechanism 25 which enables the skirt end 24 to be moved towards and away from the wall 20, which in turn raises and lowers the plate 13. Two positions are shown by way of example in Figure 4, one in dotted outline. The mechanism 25 shown in the drawing uses a threaded stud 26 pivotably mounted on the wall 20 by a shaft 27 in a collar 28 attached to the wall 20. The end of the stud 26 rotates in the shaft 27 and carries a second shaft 29 which moves on the stud 26 and is carried in a collar 30 on the end 24 of the skirt 14. A nut 31 is attached to the shaft 29 so that as the stud 26 is rotated by a knob 31, the shaft 29 moves up or down the stud 26, with it carrying the end of the skirt 14.

Access to adjust the mechanism 25 is achieved via a small panel 33 in the outer housing 11. Considerable force is applied to the plate 13 by the air stream but manual adjustment of the angle of the plate 13 can be achieved by providing sufficient gearing to the adjustment mechanism, whilst the mechanism does not release the plate 13 during adjustment and so there is no danger of the plate 13 crashing against the wall 20.

For motorised control, the plate 13 may be mounted at wall 20 by a heavy shaft (not shown) which is rotated by a motor. One suitable electric motor is a BELIMO SM220-SR (Trade Mark). The motorised system may use a worm/wormwheel gearing arrangement to lock the shaft and plate 13 in their rotational position. A skirt 14 is provided for the reasons given above. The skirt may be as described above or a flexible rubber skirt which bears on the wall 20 may be provided.

The bottom of the duct 10 is provided with an aperture extending virtually its whole length. the aperture is covered by a door 16 hinged to the duct 10 by hinges 17 and forming the bottom wall of the duct 10. Below the door 16 a similar sized panel 18 is hinged to or removable from the housing 11 so that ready access is provided by swinging open the panel 18 and the door 16. It will be noted that in its normal configuration, for any cleaning or removal of particulate material from the unit, the material will tend to fall out of the unit once the panels are released thus minimising the likelihood of material being left in the housing 11 after cleaning. The door 16 and panel 18 may be held closed by quick release fasteners (not shown).

In operation, the air with suspended waste material elements enters at A into the duct 10 so that the solid material elements are carried forward through the duct. Some of the air permeates through the perforated duct 10 into the duct formed by the housing 11. The baffle plate 13 creates some back pressure to further enhance this action. The principal function of the baffle plate 13 is to deflect the flow of air and suspended material so that it impinges on the outer curved wall of the bend 12 at an acute angle, and this reduces the tendency of the solid material to adhere to the bend under the pressure of the air stream and possibly build up to such an extent that the perforate wall of the bend would become partially or wholly blocked. The material strikes the wall with a substantial component of velocity along the wall and consequently is easily carried around the bend and down into the vertical material discharge duct. The remaining air passes out through the perforate walls of the bend 12 and is discharged by further ducting with the air in the housing 11 at B.

It is noted that if the air itself carries sensible heat, then the use of further ducting to carry the air away, rather than discharging it freely from a cyclone, enables a useful energy saving to be achieved, since the heat may be extracted from the air, e.g. for space heating. If the air is to be returned into a building it should be filtered e.g. in a fabric filter provided with a shaker or back-blowing air jets for cleaning. A fan will formally be required to overcome the flow resistance due to the filter.

The main advantage of having a baffle plate 13 which can be readily adjusted is two-fold. The plate 13 can be ajdusted during operation of the unit to fine tune its function as may be required. Further, adjustment can be made to allow the unit to function satisfactorily as the sizes of particulate material change. In paper trimming for example, changes can occur quite randomly as the trim size alters for different batches of rolls being trimmed.

In the described arrangement, it is also possible and the design lends itself now to motorising the adjustments of the baffle plate 13. This means that the baffle plate 13 can be moved by a remote controller positioned, say, in a control room of an overall production line.

Access to the inside of the duct 10 for cleaning is facilitated by the drop down doors or panels 16, 18 which ensure that material is not left in the housing 11 after cleaning and door 16 is not prevented from opening by material within the duct 10.

## Claims

1. A material discharge unit for separating lightweight solid material elements of substantial size from a conveying air or gas system, comprising a housing (11), an elongate perforate duct (10) in the housing (11), an inlet (10a) for feeding the conveying stream and suspended solid elements to the interior of the perforate duct (19), a perforate bend (12) within the housing (11) at a dischage end of the perforate duct (10) to discharge the solid elements at an angle to the air flow direction while allowing the air or gas stream to continue onwardly to a discharge end (11a) of the housing (11), a deflection baffle (13) located at the junction between the perforate duct (10) and the bend (12) to deflect the conveying air or gas stream and solid elements away from the solid material element discharge direction so that they impinge on a wall (12a) of the bend (12) at an acute angle, and adjustment means (25, 33) provided for adjusting the angle of the deflection baffle (13), characterised in that the adjustment means is adapted to be operated while the discharge unit is in use, and the adjustment means (25, 30) is arranged to hold the baffle (13) in place mechanically against the force of the air or gas stream during adjustment.

2. A unit as claimed in claim 1, characterised in that the baffle angle adjustment means is housed between the ducting (10, 12) and the housing (11).

3. A unit as claimed in claim 1 or 2, characterised in that a skirt (14) is provided on an underside of the baffle plate (13) and penetrates a wall (20) of the ducting (10, 12).

4. A unit as claimed in claim 3, characterised in that an end (24) of the skirt (14) outside of the wall (20) is attached to the wall (20) by a threaded rod (26), the rod (26) being turned to adjust the position of the skirt end (24) and hence the baffle plate angle.

5. A unit as claimed in claim 1, characterised in that the baffle plate (13) is mounted on a shaft which is rotated by a power source to change the angle of the baffle plate (13).

6. A unit as claimed in any one of claims 1 to 6, characterised in that the duct (10) and housing (11) include readily openable panels which are in register to allow cleaning of the duct (10).

7. A material discharge unit for separating lightweight solid material elements of substantial size from a conveying air or gas stream, comprising a housing (11), an elongate perforate duct (10) in the housing (11), an inlet for feeding the conveying stream and suspended solid elements to the interior of the duct (10), a perforate bend (12) within the housing (11) at the discharge end of the perforate duct (10) to discharge the solid material at an angle to the air flow direction while allowing the air or gas stream to continue onwardly to a discharge end (11a) of the housing (11), and a deflection baffle (13) located at the junction between the elongate duct (10) and the perforate bend (12) to deflect the solid material elements and the conveying air or gas stream away from the solid material element discharge direction so that they impinge on a wall (12a) of the perforate bend (12) at an acute angle, characterised in that a readily openable panel (18) is provided on an underside of the housing and a readily openable panel (16) is provided on an underside of the duct (10), whereby the two panels (16, 18) may be opened to drop waste material from the duct (10) when cleaning the unit.

8. A unit as claimed in claim 2, characterised in that a small panel (33) is provided in a wall of the housing (11) to allow access to the adjustment means.

## Patentansprüche

1. Material-Austragseinheit zum Abtrennen von leichten Feststoffelementen von erheblicher Größe aus einer Luft- oder Gasförderanlage, mit einem Gehäuse (11), einem langgestreckten Loch- oder Siebrohr (10) in dem Gehäuse (11), einem Einlaß (10a) für die Zuführung des Förderstroms mit darin suspendierten Feststoffelementen ins Innere des Siebrohrs (10), einem Loch- oder Siebknie (12) innerhalb des Gehäuses (11) am Austragsende des Siebrohrs (10), um die Feststoffelemente unter einem Winkel zur Luftströmungsrichtung auszutragen, während der Luft- oder Gasstrom zu einem Austragsende (11a) des Gehäuses (11) weiterfließen kann, einer an der Verbindungsstelle zwischen dem Siebrohr (10) und dem Knie (12) angeordneten Ablenkplatte (13) zur Ablenkung des Luft- oder Gasförderstroms und der Feststoffelemente aus der Austragsrichtung der Feststoffelemente, so daß diese unter einem spitzen Winkel auf eine Wand (12a) des Knies (12) aufprallen, und mit einer Justiereinrichtung (25, 30) zur Einstellung des Winkels der Ablenkplatte (13), dadurch gekennzeichnet, daß die Justiereinrichtung so eingerichtet ist, daß beim Betrieb der Austragseinheit die Justiereinrichtung (25, 30) die Ablenkplatte (13) während der Einstellung mechanisch gegen die Kraft des Gas- oder Luftstroms fixiert.

2. Einheit nach Anspruch 1, dadurch gekennzeichnet, daß die Ablenkplatten-Justiereinrichtung zwischen der Rohrleitung (10, 12) und dem Gehäuse (11) untergebracht ist.

3. Einheit nach Anspruch 1 oder 2, dadurch gekennzeichnet, daß an einer Unterseite der Ablenkplatte (13) eine Schürze (14) angebracht ist und durch eine Wand (20) der Rohrleitung (10, 12) hindurchgeht.

4. Einheit nach Anspruch 3, dadurch gekennzeichnet, daß ein Ende (24) der Schürze (14) außerhalb der Wand (20) durch einen Gewindestab (26) an der Wand (20) befestigt ist, wobei der Gewindestab (26) gedreht wird, um die Lage des Schürzenendes (24) und damit den Ablenkplattenwinkel einzustellen.

5. Einheit nach Anspruch 1, dadurch gekennzeichnet, daß die Ablenkplatte (13) auf einer Welle montiert ist, die durch eine Energiequelle gedreht wird, um den Winkel der Ablenkplatte (13) zu verändern.

6. Einheit nach einem der Ansprüche 1 bis 6, dadurch gekennzeichnet, daß das Rohr (10) und das Gehäuse (11) leicht zu öffnende, aufeinanderpassende Platten aufweisen, um das Reinigen des Rohrs (10) zu ermöglichen.

7. Material-Austragseinheit zum Abtrennen von leichten Feststoffelementen von erheblicher Größe aus einem Luft- oder Gasförderstrom, mit einem Gehäuse (11), einem langgestreckten Loch- oder Siebrohr (10) in dem Gehäuse (11), einem Einlaß für die Zuführung des Förderstroms mit darin suspendierten Feststoffelementen ins Innere des Siebrohrs (10), einem Loch- oder Siebknie (12) innerhalb des Gehäuses (11) am Austragsende des Siebrohrs (10), um die Feststoffe unter einem Winkel zur Luftströmungsrichtung auszutragen, während der Luft- oder Gasstrom zu einem Austragsende (11a) des Gehäuses (11) weiterfließen kann, und einer an der Verbindungsstelle zwischen dem langgestreckten Rohr (10) und dem Siebknie (12) angeordneten Ablenkplatte (13) zur Ablenkung der Feststoffelemente und des Luft- oder Gasförderstroms aus der Austragsrichtung der Feststoffelemente, so daß diese unter einem spitzen Winkel auf eine Wand (12a) des Siebknies (12) aufprallen, dadurch gekennzeichnet, daß an einer Unterseite des Gehäuses eine leicht zu öffnende Platte (18) und an einer Unterseite des Rohrs (10) eine leicht zu öffnende Platte (16) angebracht sind, wodurch die beiden Platten (16, 18) geöffnet werden können, um beim Reinigen der Einheit Abfallstoffe aus dem Rohr (10) herausfallen zu lassen.

8. Einheit nach Anspruch 2, dadurch gekennzeichnet, daß in einer Wand des Gehäuses (11) eine kleine Platte (33) angebracht ist, um den Zugang zur Justiereinrichtung zu ermöglichen.

## Revendications

1. Une unité d'évacuation de matériaux pour séparer des éléments de matériaux solides légers de taille substantielle d'un système de transport à air ou à gaz, comprenant un boîtier (11), une conduite perforée allongée (10) dans le boîtier (11), un orifice d'entrée (10a) servant à amener le courant de transport et les éléments solides en suspension vers l'intérieur de la conduite perforée (10), un coude perforé (12) à l'intérieur du boîtier (11) au niveau d'une extrémité d'évacuation de la conduite perforée (10) pour évacuer les éléments solides en formant un angle par rapport à la direction d'écoulement de l'air, tout en permettant au courant d'air ou de gaz de continuer son passage vers une extrémité d'évacuation (11a) du boîtier (11), et une chicane de déviation (13), agencée au niveau de la jonction entre la conduite perforée (10) et le coude (12), pour dévier le courant d'air ou de gaz de transport et les éléments solides et les éloigner de la direction d'évacuation des éléments de matériaux solides, de sorte qu'ils se heurtent contre une paroi (12a) du coude (12), à un angle aigu, ainsi qu'un moyen d'ajustement (25, 30), servant à ajuster l'angle de la chicane de déviation (13), caractérisée en ce que le moyen d'ajustement peut être actionné pendant le fonctionnement de l'unité d'évacuation et en ce que le moyen d'ajustement (25, 30) est agencé de sorte à assurer le maintien en place mécanique de la chicane (13), contre la force exercée par le courant d'air ou de gaz au cours de l'ajustement.

2. Une unité selon la revendication 1, caractérisée en ce que le moyen d'ajustement de l'angle de la chicane est agencé entre la conduite (10, 12) et le boîtier (11).

3. Une unité selon les revendications 1 ou 2, caractérisée en ce qu'une bordure (14) est agencée sur un côté inférieur de la chicane (13) et en ce qu'elle pénètre dans une paroi (20) de la conduite (10, 12).

4. Une unité selon la revendication 3, caractérisée en ce qu'une extrémité (24) de la bordure (14) à l'extérieur de la paroi (20) est fixée à la paroi (20) par l'intermédiaire d'une tige filetée (26), la tige (26) étant tournée pour ajuster la position de l'extrémité de la bordure (24) et par suite l'angle de la chicane.

5. Une unité selon la revendication 1, caractérisée en ce que la chicane (13) est montée sur un arbre qui est tourné par l'intermédiaire d'une source de puissance pour changer l'angle de la chicane (13).

6. Une unité selon l'une quelconque des revendications 1 à 6, caractérisée en ce que la conduite (10) et le boîtier (11) englobent des panneaux à ouverture facile, qui sont alignés pour permettre le nettoyage de la conduite (10).

7. Une unité d'évacuation de matériaux pour séparer des éléments de matériaux solides légers de taille substantielle d'un courant d'air ou de gaz de transport, comprenant un boîtier (11), une conduite perforée allongée (10) dans le boîtier (11), un orifice d'entrée servant à amener le courant de transport et les éléments solides en suspension vers l'intérieur de la conduite (10), un coude perforé (12) à l'intérieur du boîtier (11), au niveau de l'extrémité d'évacuation de la conduite perforée (10), pour évacuer les matériaux solides en formant un angle par rapport à la direction de l'écoulement d'air, tout en permettant au courant d'air ou de gaz de continuer son passage vers une extrémité d'évacuation (11a) du boîtier (11), et une chicane de déviation (13), agencée au niveau de la jonction entre la conduite allongée (10) et le coude perforé (12), pour dévier les éléments de matériaux solides et le courant d'air ou de gaz de transport et les éloigner de la direction d'évacuation des éléments de matériaux solides, de sorte qu'ils se heurtent contre une paroi (12a) du coude perforé (12), à un angle aigu, caractérisée en ce qu'un panneau à ouverture facile (18) est agencé sur un côté inférieur du boîtier et en ce qu'un panneau à ouverture facile (16) est agencé sur un côté inférieur de la conduite (10), les deux panneaux (16, 18) pouvant ainsi être ouverts pour faire tomber les déchets de la conduite (10) pendant le nettoyage de l'unité.

8. Une unité selon la revendication 2, caractérisée en ce qu'un petit panneau (33) est agencé dans une paroi du boîtier (11) pour permettre l'accès au moyen d'ajustement.
